# EUROPEAN PATENT SPECIFICATION

(11) **EP 1 544 026 B1**
(45) Date of publication and mention of the grant of the patent: **24.05.2006**
(21) Application number: 04105676.3
(22) Date of filing: 10.11.2004
(51) Int. Cl.: B60N 2/28, B60R 22/10

(54) **Fixing device for carrycots and the like**
Befestigungseinrichtung für Babytragevorrichtungen und dergleichen
Dispositif de fixation pour nacelles porte-bébé

(30) Priority: 16.12.2003 ES 200302891 U
(43) Date of publication of application: 22.06.2005
(73) Proprietor: PLAY, S.A., 08184 Palau de Plegamans (ES)
(72) Inventor: Jane Stopp, Joaquim, 08184 Palau de Plegamans (ES)
(74) Representative: Ponti Sales, Adelaida

(56) References cited:
- EP-A- 0 343 704
- EP-A- 0 452 804
- EP-A- 1 199 213
- GB-A- 2 326 101
- NL-A- 9 201 526
- US-A- 4 500 133
- US-A- 6 092 869

## Description

The present invention refers to a device for the fixation of carrycots and the like, used with the seat belt of the car.

### BACKGROUND OF THE INVENTION

The use of buckles to adjust the seat belt of the cars is known. These buckles usually comprise an opening totally surrounded by the body of the buckle and an intermediate body which extends itself along the opening.

A particular usage of these buckles is in security carrycots for cars.

In order to adjust the seat belt it is necessary to pass it through the opening and the intermediate body. To set it, the intermediate body offers nowadays a slight movement to slightly detach it from the body of the buckle.

Anyway, the practice has proved that it is really uncomfortable, even slow, the introduction of the seat belt in such an opening, over such an intermediate body.

On the other hand, there are devices for the tightening of the seat belt which are used in security child seats for cars.

These tightening devices comprise a body which is fixed in the seat and an articulated body regarding the fixed body, having between both bodies the seat belt.

As indicated by their name, these devices are used only to tighten the seat belt, and not to fix the seat along the seat belt, which is carried out through the buckle of the seat belt.

A device according to the preamble of claim 1 is known from GB-A-2 326 101.

### DESCRIPTION OF THE INVENTION

With the device of this invention as defined in claim 1 the abovementioned inconveniences are solved, adding some other advantages which will be described further on.

The device for the fixation of carrycots and similar objects of this present invention comprises a rod around which the seat belt of a car is passed for the fixation of a carrycot or similar object, wherein the rod is located in a first body fixed to a carrycot or similar object, the first body comprising a second articulated body movable from an open position to a closed position, in which it locks the seat belt.

In this way, the fixation of the carrycot or similar object is much more comfortable than with the already known buckles.

Advantageously, such a second articulated body comprises in its end which is further to the articulation a flap which can be engaged with a bolt.

Preferably, such a bolt is articulated with the first fixed body.

### BRIEF DESCRIPTION OF THE DRAWINGS

In order to improve all of the above mentioned a series of drawings are attached, in which in a schematic way and only as a non limitative example, a practical case of embodiment is represented.
Figure 1 is a perspective view of the device of attachment of the present invention in the open position, with the seat belt; and
Figure 2 is a perspective view of the device of attachment of the present invention in the close position, with the seat belt.

### DESCRIPTION OF A PREFERRED EMBODIMENT

As it can be seen in the figures, the device of attachment of the present invention comprises a first body 1 fixed to a carrycot used for its use in a car, and a second body 2 articulated to such a first body 1.

The first fixed body 1 comprises in its inside a rod 3, vertical in the represented embodiment, around which a seat belt 4 of a car passes through, in which a carrycot is allocated.

The second articulated body 2 comprises a flap 5 which can be engaged with a bolt 6 in the upper part of the first fixed body 1. Such a bolt 6 is also mounted in an articulated way regarding the first fixed body 1.

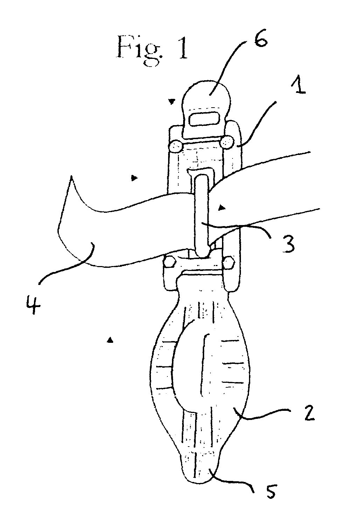

In order to fix the carrycot, first the seat belt 4 is passed around the mentioned rod 3, as it can be seen in figure 1.

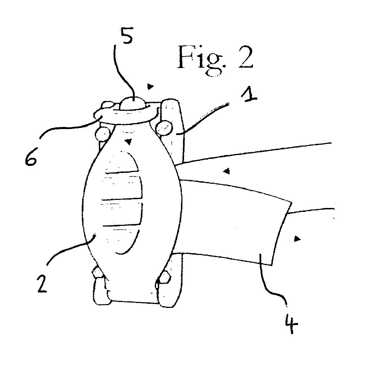

Next, the second articulated body 2 is spin so that it is collocated over the first fixed body 1, engaging after this the bolt 6 in the flap 6 (figure 2).

This same procedure will be carried out with any other fixing device in the other end of the carrycot.

In this way, the seat belt 4 is locked between both bodies 1 and 2, preventing the carrycot from moving.

To release the seat belt 4, it is only necessary to remove the bolt 6 and, then, pull the seat belt 4.

It is evident that with the fixation device of the present invention it is much more comfortable to fix and release a carrycot in a car than with the buckles which are used at present.

## Claims

1. Device for the fixation of carrycots and the like, comprising a first body (1) fix to the carrycot or similar object, the first body (1) comprising a second body (2) articulated to the same, movable from an open position to a close position, in which it locks a seat belt (4) of a car, **characterized in that** the device further comprises a rod (3) which is located in the first body (1) and around which the seat belt (4) is passed to fix the carrycot or similar object.

2. Fixation device according to claim 1, **characterized in that** the mentioned second articulated body (2) comprises in the end which is further to the articulation a flap (5) which can be engaged with a bolt (6).

3. Fixation device according to claim 2, **characterized in that** such a bolt (6) is articulated to the first fixed body (1).

## Patentansprüche

1. Vorrichtung zur Befestigung von Babytragetaschen und Ähnlichem, mit einem ersten Teil (1), welches fest an der Babytragetasche oder einem ähnlichen Gegenstand befestigt ist, wobei das erste Teil (1) ein zweites Teil (2), welches gelenkig an demselben vorgesehen ist, aufweist, welches von einer offenen Stellung in eine geschlossene Stellung bewegbar ist, in welcher es einen Sicherheitsgurt (4) eines Fahrzeugs arretiert, **dadurch gekennzeichnet, dass** die Vorrichtung weiterhin eine Stange (3) aufweist, welche an dem ersten Teil (1) angeordnet ist, und um welche der Sicherheitsgurt (4) zum Befestigen der Babytragetasche oder des ähnlichen Gegenstands geführt ist.

2. Befestigungsvorrichtung nach Anspruch 1, **dadurch gekennzeichnet, dass** das zweite gelenkig vorgesehene Teil (2), an dem Ende, welches weiter von dem Gelenk beabstandet ist, eine Klappe (5) aufweist, welche mit einem Bolzen (6) in Eingriff bringbar ist.

3. Befestigungsvorrichtung nach Anspruch 2, **dadurch gekennzeichnet, dass** ein solcher Bolzen (6) gelenkig an dem ersten festen Teil (1) vorgesehen ist.

## Revendications

1. Dispositif pour la fixation de nacelles porte-bébé et similaires, comprenant un premier corps (1) fixé à la nacelle porte-bébé ou objet similaire, le premier corps (1) comprenant un second corps (2) articulé à celui-ci, mobile depuis une position ouverte vers une position fermée, dans laquelle il verrouille une ceinture de sécurité (4) d'un véhicule,
**caractérisé en ce que**
le dispositif comprend en outre une tige (3) qui est située dans le premier corps (1) et autour de laquelle est passée la ceinture de sécurité (4) pour fixer la nacelle porte-bébé ou objet similaire.

2. Dispositif de fixation selon la revendication 1,
**caractérisé en ce que**
le second corps articulé mentionné (2) comprend, à l'extrémité qui est éloignée de l'articulation, un rabat (5) qui peut être engagé avec un bouton (6).

3. Dispositif de fixation selon la revendication 2,
**caractérisé en ce qu'**
un tel boulon (6) est articulé au premier corps fixe (1)
